# EUROPÄISCHE PATENTSCHRIFT

(11) **EP 3 585 144 B1**
(45) Veröffentlichungstag und Bekanntmachung des Hinweises auf die Patenterteilung: **06.01.2021**
(21) Anmeldenummer: 18705878.9
(22) Anmeldetag: 14.02.2018
(51) Int. Cl.: A01C 17/00, A01C 21/00

(54) **VERFAHREN ZUR REGELUNG DES ABWURFVERHALTENS EINES SCHLEUDERSTREUERS FÜR DÜNGER**
METHOD FOR REGULATING THE THROWING BEHAVIOUR OF A CENTRIFUGAL SPREADER FOR FERTILISER
PROCÉDÉ DE RÉGULATION DU COMPORTEMENT D'ÉPANDAGE D'UN ÉPANDEUR CENTRIFUGE D'ENGRAIS

(30) Priorität: 22.02.2017 DE 102017103567
(43) Veröffentlichungstag der Anmeldung: 01.01.2020
(73) Patentinhaber: Amazonen-Werke H. Dreyer GmbH & Co. KG, 49205 Hasbergen (DE)
(72) Erfinder: DREYER, Justus, 49078 Osnabrück (DE); RAHE, Florian, 49504 Lotte (DE); WESSELS, Thomas, 49080 Osnabrück (DE); STRÖBEL-FRÖSCHLE, Markus, 49124 Georgsmarienhütte (DE)
(86) Internationale Anmeldenummer: PCT/EP2018/053607
(87) Internationale Veröffentlichungsnummer: WO 2018/153737

(56) Entgegenhaltungen:
- DE-A1- 19 723 359
- DE-A1-102013 103 060
- DE-A1-102014 116 023

## Beschreibung

Die Erfindung betrifft ein Verfahren zur Regelung des Abwurfverhaltens eines Schleuderstreuers für Dünger sowie einen entsprechend ausgebildeten Schleuderstreuer.

Wie beispielsweise aus der DE 197 23 359 A1 bekannt ist, eigenen sich für den Austrag von Dünger auf landwirtschaftlichen Anbauflächen Schleuderstreuer, insbesondere solche mit zwei nebeneinander angeordneten und gegenläufig angetriebenen Streuscheiben. Hierbei wird der Dünger in Abhängigkeit vom Streuscheibentyp und der Düngersorte in Form eines charakteristischen Streufächers oder Streubilds durch Anschlussfahren über eine vorgegebene Arbeitsbreite verteilt.

Als Parameter zur Charakterisierung von Streubildern einer Streuscheibe eignen sich die mittlere Wurfweite WW und der mittlere Abwurfwinkel AWW des Düngeraustrags. Diese Werte werden für verschiedene Arbeitsbreiten AB und für unterschiedliche Düngersorten in Streutabellen bereitgestellt und können für eine gewünschte Arbeitsbreite an einer Bedienstation zu Beginn des Arbeitsbetriebs eingegeben werden. Die mittleren Abwurfwinkel AWW und Wurfweiten WW werden beispielsweise als 50%-Perzentil einer in Umfangsrichtung zum Streuscheibenmittelpunkt gemessenen Abwurfwinkelverteilung beziehungsweise einer radial von der Streuscheibe aus definierten Wurfweiteverteilung des Streubilds ermittelt. Weitere gebräuchliche Parameter sind der Anfangswert AWWa der Abwurfwinkelverteilung als 5%-Perzentil und der zugehörige Endwert AWWe als 95%-Perzentil, ebenso ein Anfangswert WWa der Wurfweiteverteilung als 5%-Perzentil und ein Endwert WWe als 95%-Perzentil. Außerdem sind Zusammenhänge zwischen der Arbeitsbreite AB, der mittleren Wurfweite WW und dem mittleren Abwurfwinkel AWW bekannt, so dass sich letzterer aus der Arbeitsbreite AB und der mittleren Wurfweite WW berechnen lässt und umgekehrt. Nachfolgend werden die Begriffe "Ist-" und "Soll-" zur sprachlichen Vereinfachung gleichbedeutend mit den Begriffen "Istwert des/der" und "Sollwert des/der" verwendet.

Diese charakteristischen Parameter von Streubildern werden beispielsweise unter reproduzierbaren Bedingungen durch Schalenversuche in Streuhallen für einzelne Düngersorten in Abhängigkeit vom Streuscheibentyp, der Drehzahl und unterschiedliche Stellungen eines an der Streuscheibe ausgebildeten Einleitsystems für Dünger ermittelt. Die für bestimmte Arbeitsbreiten und Düngersorten unter Standardbedingungen einzustellenden Aufgabepunkte des Düngers und Drehzahlen werden dann üblicherweise in Streutabellen aufgelistet. Nachteilig ist jedoch, dass sich insbesondere die Oberflächeneigenschaften von Dünger in Abhängigkeit von Lagerbedingungen, wie beispielsweise der Luftfeuchte oder dergleichen, ändern. Insbesondere das Reibverhalten der Düngerkörner wirkt sich entscheidend auf die Abwurfwinkelverteilung aus. Ebenso können sich einzelne Düngerchargen unterscheiden, beispielsweise hinsichtlich der Korngröße, die direkten Einfluss auf die erzielte Wurfweiteverteilung hat. Daher kann die Anwendung der unter standardisierten Bedingungen ermittelten Streuparameter im konkreten Anwendungsfall zu unbefriedigenden Ergebnissen führen.

Es wurden daher bereits Anstrengungen unternommen, Streufächer bzw. Ist-Streubilder beim Düngeraustrag zu kontrollieren und gegebenenfalls an ein Soll-Streubild anzugleichen. Hierzu ist es beispielsweise aus der DE 10 2013 103 060 A1 bekannt, an jeder Streuscheibe über deren nutzbaren Abwurfwinkelbereich Radarsensoren zu verteilen, die Radarkeulen aussenden und im nutzbaren Abwurfwinkelbereich Information über eine Ist-Abwurfwinkelverteilung und/oder eine Ist-Geschwindigkeitsverteilung der abgeworfenen Düngerkörner liefern. Daraus lässt sich dann beispielsweise der mittlere Abwurfwinkel AWW ableiten. Zusätzlich kann mittels des aus DE 10 2014 116 023 A1 bekannten Verfahrens die mittlere Wurfweite WW durch Verwendung von Radarsensoren ermittelt werden. Somit liegt im Arbeitsbetrieb laufend Information über Ist-Abwurfwinkel und Ist-Wurfweite vor, die zur Steuerung der den Streuscheiben zugeordneten Einleitsysteme für Dünger und/oder zur Drehzahlanpassung der Streuscheiben verwendet werden kann.

Prinzipiell können auf dieser Grundlage insbesondere die Drehzahl und der Abwurfwinkel bei bekanntem Streuscheibentyp derart eingestellt werden, dass der Düngerstreuer bei vorgegebener Arbeitsbreite optimiert arbeitet. Zu diesem Zweck arbeiten vorzugsweise ein Regelkreis zur Einstellung der Wurfweite und weiterer Regelkreis zur Einstellung des Abwurfwinkels parallel, wobei sich diese Regelkreise gegenseitig beeinflussen können.

Durch Kombination einer Überwachung des Abwurfwinkels und der Wurfweite während des Düngeraustrags lässt sich die Abwurfwinkelverteilung des Streubilds somit fortlaufend an eine vorgegebene Arbeitsbreite und die eingesetzte Düngersorte anpassen, ohne dafür auf Streutabellen zurückgreifen zu müssen.

In der Praxis hat sich jedoch gezeigt, dass der Regelkreis zur Einstellung der Wurfweite unter bestimmten Einsatzbedingungen zu träge ist und kaum vorhersehbare Totzeiten auftreten, so dass eine stabile Regelung des Abwurfverhaltens insgesamt und insbesondere die Einhaltung der vorgegebenen Arbeitsbreite nicht zuverlässig gegeben ist.

Es besteht daher Bedarf, die Regelung des Abwurfverhaltens beim Düngeraustrag so weiterzubilden, dass das Abwurfverhalten zuverlässiger innerhalb seiner Vorgaben bleibt und insbesondere vorgegebene Arbeitsbreiten erzielt werden.

Die gestellte Aufgabe wird gemäß Anspruch 1 mit einem Verfahren zur Regelung des Abwurfverhaltens eines Schleuderstreuers für Dünger gelöst. Demnach wird zuerst ein Sollwert der Wurfweite passend zu einem Sollwert der Arbeitsbreite ermittelt. Dann wird für wenigstens eine Streuscheibe eine von mehreren Drehzahlstufen eingestellt, um den Istwert der Wurfweite an den Sollwert der Wurfweite anzunähern. Auf dieser Basis wird ferner ein angepasster Soll-Abwurfwinkel zur Regelung eines Ist-Abwurfwinkels aus der Ist-Wurfweite ermittelt, der einer vom Unterschied zwischen Ist-Wurfweite und Soll-Wurfweite (als Folge der Drehzahlabstufung) verursachten Abweichung von der Soll-Arbeitsbreite kompensatorisch entgegenwirkt.

Mit dem Winkelversatz wird der ursprünglich vorgegebene Sollwert des Abwurfwinkels in einen für die fortlaufende Regelung angepassten Sollwert des Abwurfwinkels umgerechnet.

Eine geeignete Anzahl diskreter Drehzahlen ist zur bedienerseitigen Auswahl vorgegeben. Passend zum Sollwert der Arbeitsbreite wird die Wurfweite durch Auswahl einer Drehzahlstufe so eingestellt, dass die derart eingestellte Wurfweite möglichst nah am Sollwert der Wurfweite liegt und danach möglichst konstant gehalten werden kann.

Das Abwurfverhalten wird somit vorrangig durch Nachregeln des Abwurfwinkels an die Vorgaben und insbesondere an die vorgegebene Arbeitsbreite angepasst. Das hinsichtlich des Regelungsverhaltens kritischere Nachregeln der Wurfweite durch Anpassung der Drehzahl ist demgegenüber untergeordnet und kann entweder ganz entfallen oder auf bestimmte kritische Zustände beschränkt werden, beispielsweise bei unerwünschter Veränderung des Streuprofils und/oder beim Erreichen einer Verstellgrenze des zugeordneten Einleitsystems.

Dadurch wird die Regelung des Abwurfverhaltens insgesamt stabilisiert. Die vorgegebene Arbeitsbreite kann daher zuverlässiger unter verschiedenen Arbeitsbedingungen eingehalten werden. Insbesondere kann eine durch die Drehzahlabstufung in Kauf genommene Unterschreitung der Soll-Wurfweite durch eine Vergrößerung des Abwurfwinkels fortlaufend kompensiert werden, indem das Streubild zu einer trapezförmigeren Verteilung hin verbreitert und der Istwert der Arbeitsbreite dadurch an die Soll-Arbeitsbreite angeglichen wird.

Unter dem Begriff Regelung des Abwurfverhaltens ist zu verstehen, dass Regelgrößen in elektronischen Reglern unter Berücksichtigung vorgegebener Regelstreckenverhalten verarbeitet werden und daraus Stellgrößen berechnet und ausgegeben werden, beispielsweise zur Ansteuerung eines Stellglieds im Einleitsystem der jeweiligen Streuscheibe. Beispielsweise wird die Regelgröße der Abwurfwinkelregelung einschließlich eines Versatzes für den Soll-Abwurfwinkel und anschließender Differenzbildung mit dem zuletzt gemessenen Ist-Abwurfwinkel berechnet.

Der Soll-Abwurfwinkel kann absolut vorgegeben sein oder aus der momentanen Wurfweite, also der gemessenen Ist-Wurfweite, und der gewünschten Arbeitsbreite mittels geeigneter Algorithmen berechnet werden. Der Ist-Abwurfwinkel wird durch Einstellen des Düngeraufgabepunktes des jeweiligen Einleitsystems nachgeregelt.

Vorzugsweise wird zur Ermittlung des angepassten Soll-Abwurfwinkels ein vorgegebener Soll-Abwurfwinkel um einen Winkelversatz angepasst. Auf diese Weise kann ein aus Streuversuchen ermittelter Soll-Abwurfwinkel möglichst einfach und effektiv an die durch die Drehzahlabstufung verursachte Abweichung der Ist-Wurfweite von der Sollwurfweite angepasst werden, so dass im Endeffekt die gewünschte Arbeitsbreite eingestellt werden kann.

Vorzugsweise unterscheiden sich benachbarte Drehzahlstufen um wenigstens 10% der maximalen Drehzahl der Schleuderscheibe voneinander. Dies ermöglicht eine praxistaugliche Bedienung des Schleuderstreuers und ein besonders stabiles Regelverhalten.

Vorzugsweise wird die Ist-Wurfweite beim Austrag des Düngers fortlaufend gemessen, insbesondere mittels Radarstrahlung vom Schleuderstreuer aus, und wird dann ferner mit der Soll-Wurfweite verglichen. Die gemessene Ist-Wurfweite kann dann dem Regelkreis zur Einstellung des Abwurfwinkels als Eingangsgröße fortlaufend bereitgestellt werden. Ferner kann überprüft werden, ob die Ist-Wurfweite kritische Schwellenwerte erreicht, um gegebenenfalls einen Wechsel der eingestellten Drehzahlstufe auslösen.

Radarmessung ermöglicht eine zuverlässige und gegen Störeinflüsse unempfindliche Messung bewegter Objekte, wie beispielsweise der ausgetragenen Düngerkörner. Unter einer fortlaufenden Messung ist zu verstehen, dass die Messung des Ist-Abwurfwinkels und der Ist-Wurfweite in geeigneten Zeitabständen während des Düngeraustrags wiederholt wird.

Vorzugsweise wird der Ist-Abwurfwinkel beim Austrag des Düngers fortlaufend gemessen, insbesondere mittels Radarstrahlung vom Schleuderstreuer aus, und mit dem Soll-Abwurfwinkel verglichen wird. Dadurch kann das Abwurfverhalten fortlaufend an Vorgaben angepasst werden, um die Soll-Arbeitsbreite einzuhalten.

Vorzugsweise ist der Ist-Abwurfwinkel ein charakteristischer, insbesondere mittlerer Abwurfwinkel einer mittels Radarstrahlen gemessenen Abwurfwinkelverteilung. Der mittlere Abwurfwinkel ermöglicht eine schnelle und auf bekannten Parametern von Streubildern beruhende Berechnung der Richtung des Düngeraustrags. Eine gemessene Abwurfwinkelverteilung bietet die Grundlage für unterschiedliche Algorithmen zur Beurteilung der Abwurfrichtung und eine zuverlässige Bestimmung des mittleren Abwurfwinkels.

Vorzugsweise regelt die Regelung den Ist-Abwurfwinkel beim Austrag des Düngers in Zeitintervallen von mindestens 5 s Dauer nach. Dies begünstigt ein stabiles und im normalen Arbeitsbetrieb ausreichend genaues Regelverhalten.

Vorzugsweise wird der Ist-Abwurfwinkel fortlaufend auf der Grundlage des angepassten Soll-Abwurfwinkels nachgeregelt, und die Drehzahlstufe wird währenddessen nicht oder nur gewechselt, falls ein vorgegebenes Schwellenkriterium erfüllt ist. Das Schwellenkriterium kann fortlaufend überprüft werden, erfordert jedoch naturgemäß keine fortlaufende Anpassung der Wurfweite durch Änderung der Drehzahl. Das Schwellenkriterium wird vorab so festgelegt, dass es nur im Ausnahmefall erfüllt werden kann. Die Regelung lässt sich dadurch vereinfachen und gegebenenfalls dennoch an geänderte Arbeitsbedingungen oder zur Kompensation unerwartete Schwankungen des Abwurfverhaltens anpassen.

Vorzugsweise ist das Schwellenkriterium erfüllt, falls eine einer benachbarten Drehzahlstufe zugeordnete Wurfweite näher an der Soll-Wurfweite liegt als die zuletzt gemessene Ist-Wurfweite, und/oder falls der Ist-Abwurfwinkel einen zulässigen Winkelbereich verlässt, insbesondere einen Bereich von 18° bis 25°.

Vorzugsweise wird die Soll-Wurfweite aus einem absolut vorgegebenen Soll-Abwurfwinkel von insbesondere 18 bis 20° und der Soll-Arbeitsbreite berechnet. Abwurfwinkel von 18 bis 20° ermöglichen für das Anschlussfahren besonders günstige dreieckförmige Streuprofile. Konstruktionsbedingt liegen die Ist-Abwurfwinkel dann möglichst geringfügig darüber, jedoch möglichst nicht darunter.

Die Soll-Wurfweite wird folglich zunächst an einen besonders günstigen Abwurfwinkel und die gewünschten Arbeitsbreite angepasst. Ausgehend davon kann ein anschließendes kompensatorisches Versetzen des Soll-Abwurfwinkels und entsprechendes Regeln des Ist-Abwurfwinkels im Sinne einer mäßigen Verschlechterung des Streubilds vergleichsweise problemlos verkraftet werden.

Die Soll-Wurfweite kann alternativ auch mittels einer vorgegebenen Konstante von der Soll-Arbeitsbreite abhängen. Prinzipiell bewährt hat sich beispielsweise ein Faktor von 0,60 bis 0,65 (beispielsweise Soll-Wurfweite = 0,62 * Arbeitsbreite).

Vorzugsweise werden die Soll-Wurfweite und der Soll-Abwurfwinkel für die Soll-Arbeitsbreite auf der Grundlage von Streuversuchen mit dem Dünger festgelegt. Derartige Messungen von Streubildern können unter standardisierten Bedingungen in einer Halle und mit einer Vielzahl von Streuparametern an allen handelsüblichen Düngern durchgeführt werden.

Vorzugsweise wird der Winkelversatz auf der Grundlage einer in Streuversuchen für unterschiedliche Soll-Abwurfwinkel des Düngers ermittelten Abhängigkeit der Ist-Wurfweite von der Drehzahl der Schleuderscheibe eingestellt. Beispielsweise können Wurfweiten und/oder Abwurfwinkel für eine Vielzahl möglicher Drehzahlen und Stellungen der Einleitsysteme bestimmt werden.

Anschließend können die durch die Drehzahlabstufung beim Austrag des Düngers unvermeidlich hervorgerufenen Abweichungen von der Soll-Wurfweite durch Interpolation aus den demgegenüber feiner abgestuften Streuversuchen abgeleitet werden. Entsprechend kann für jede Drehzahlstufe ein Winkelversatz für den Soll-Abwurfwinkel im Sinne eines Offset bestimmt werden, um die von der Drehzahlabstufung hervorgerufenen Abweichungen von der Soll-Wurfweite in der Abwurfwinkelregelung zu kompensieren.

Vorzugsweise wird zur Initialisierung der Regelung eine Kalibrierungsfahrt von 10 bis 20 s Dauer, insbesondere von 14 bis 16 s Dauer, unter Vorgabe der Soll-Arbeitsbreite, mit der zu verwendenden Streuscheibe und mit der auszubringenden Düngersorte durchgeführt. Dies erfolgt beispielsweise nach Austausch des Scheibensatzes und/oder Änderung der Arbeitsbreite und/oder nach dem Einfüllen einer neuen Düngercharge und ermöglicht einen ordnungsgemäßen Austrag der Düngersorte unmittelbar im Anschluss an die Kalibrierungsfahrt.

Vorzugsweise wird die Kalibrierungsfahrt nur durchgeführt, falls für die Drehzahl der Streuscheibe nach einer vorangegangenen Kalibrierungsfahrt wenigstens einmal der Wert 0 registriert wurde, und falls wenigstens eine Streuscheibe im Streumodus für normales Anschlussfahren ist. Die Kalibrierungsfahrt wird dann vorzugsweise automatisch ausgelöst. Der Wert 0 zeigt an, dass die Streuscheiben beispielsweise zum Nachfüllen von Dünger stillgestanden sind. Eine nach einem Feldwechsel dann gegebenenfalls unnötigerweise ausgelöste Kalibrierungsfahrt ist als Ausnahmefall demgegenüber von untergeordneter Bedeutung.

Gemäß Anspruch 13 wird die gestellte Aufgabe ferner mit einem Schleuderstreuer für Dünger gelöst, der zwei Streuscheiben zum Austrag des Düngers über die vorgegebene Arbeitsbreite und eine Regelung zum Ausführen des Verfahrens nach wenigstens einem der vorigen Ansprüche umfasst.

Vorzugsweise umfasst der Schleuderstreuer ferner einen mechanischen Antrieb für die Streuscheiben und eine Eingabeeinheit zum Einstellen der Drehzahlstufe durch Auswahl aus mehreren vorgegebenen Drehzahlstufen. Bei einem mechanischen Schleuderstreuer wird die Drehzahl der Streuscheiben über einen mechanischen Antrieb vom Schleuderstreuer vorgegeben. Hierzu wird dem Bediener die eingestellte Drehzahl angezeigt. Ferner stehen dann mehrere Drehzahlstufen zur bedienerseitigen Auswahl.

Bei einem mechanischen Antrieb der Streuscheibe ist es besonders vorteilhaft, die Drehzahl durch Übermittlung eines Steuersignals vom Schleuderstreuer an einen damit gekoppelten und die Streuscheibe antreibenden Schlepper lediglich stufenweise anzupassen. Beispielsweise kann der Schleuderstreuer dem Schlepper über einen Isobus oder dergleichen Informationen und Kommandos übermitteln, um eine erforderliche Drehzahl der Zapfwelle einzustellen und dadurch eine bestimmte Drehzahlstufe der Streuscheiben zu aktivieren. Derartige Anpassungen können prinzipiell auch automatisch ohne Eingriff des Bedieners erfolgen.

Vorzugsweise umfasst der Schleuderstreuer insbesondere radargestützte Überwachungseinrichtungen zur fortlaufenden Messung des Ist-Abwurfwinkels und der Ist-Wurfweite.

Vorzugsweise wird eine Warnmeldung ausgegeben, falls der Ist-Wurfweite außerhalb eines zulässigen Sollwertbereichs liegt und/oder eine Verstellgrenze des zugehörigen Einleitsystems erreicht ist, und falls und die Drehzahlstufe gewechselt werden soll.

Warnmeldungen sind insbesondere bei einem mechanischen Antrieb des Schleuderstreuers mittels einer Zapfwelle oder dergleichen vorteilhaft, da sich die Drehzahl dann in der Regel nicht vom Schleuderstreuer aus ändern lässt sondern nur durch einen Bedienereingriff am Schlepper. Beispielsweise wird dazu eine nötige Drehzahlanpassung am Schlepper angezeigt und vom Bediener bestätigt bzw. editiert.

Bevorzugte Ausführungsformen der Erfindung sind in den Zeichnungen dargestellt. Es zeigen:
- Fig. 1: eine schematische Draufsicht auf einen Schleuderstreuer mit einem von diesem erzeugten Streubild und charakteristischen Parametern;
- Fig. 2: eine schematisches Diagramm mit Drehzahlstufen;
- Fig. 3: eine bevorzugte Ausführungsform des Verfahrens; und
- Fig. 4: eine weitere bevorzugte Ausführungsform des Verfahrens.

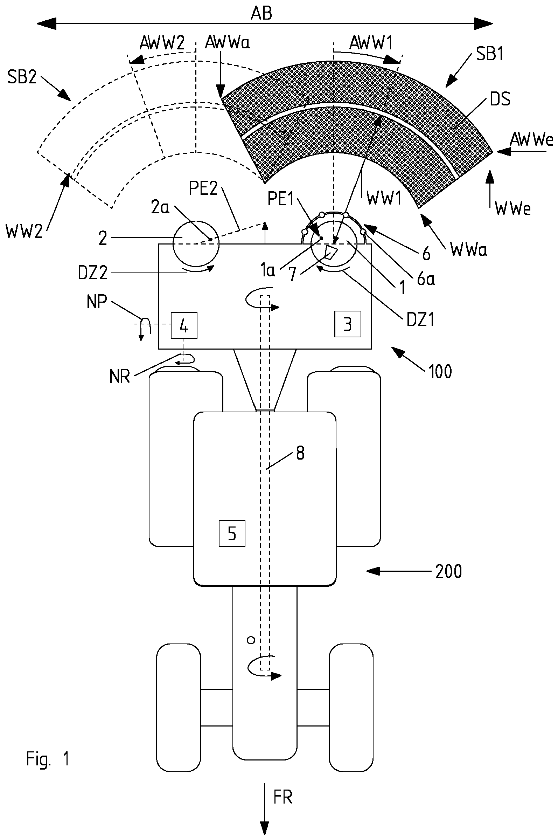

Wie die Fig. 1 erkennen lässt, umfasst der Schleuderstreuer 100 in einer bevorzugten Ausführungsform eine erste Streuscheibe 1 mit einem zugehörigen Einleitsystem 1a für Dünger sowie eine zweite Streuscheibe 2 mit einem zugehörigen Einleitsystem 2a. Die Einleitsysteme 1a, 2a umfassen herkömmliche Dosierungseinrichtungen, wobei wenigstens die Stellungen PE1, PE2 ihrer Aufgabepunkte bezüglich der Streuscheiben 1, 2 maschinell eingestellt werden können. Die Stellungen PE1, PE2 sind beispielsweise als Positionswinkel bezüglich einer beliebigen Hilfslinie in Drehrichtung der jeweiligen Streuscheibe 1, 2 definiert, gegebenenfalls ferner als radialer Abstand von der Drehachse der jeweiligen Streuscheibe 1, 2.

In der Fig. 1 sind die Einleitsysteme 1a, 2a schematisch anhand ihrer Aufgabepunkte für Dünger dargestellt. Aus Gründen der Übersichtlichkeit ist lediglich die Stellung PE2 des zweiten Einleitsystems 2a beispielhaft durch dessen Positionswinkel angedeutet. Für das Einleitsystem 1a gilt der gleiche Zusammenhang bezogen auf die Drehrichtung der ersten Streuscheibe 1.

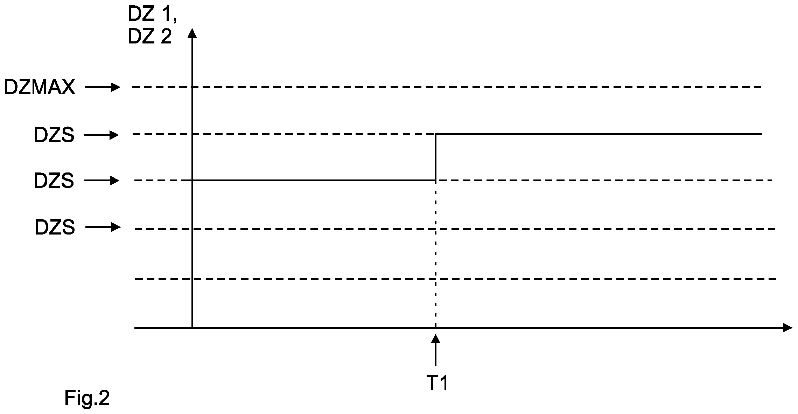

Der Schleuderstreuer 100 umfasst ferner eine Steuereinheit 3 zur Steuerung der Streuscheiben 1, 2 und ihrer Einleitsysteme 1a, 2a. Die Steuereinheit 3 ermöglicht wenigstens eine Anpassung der Stellungen PE1, PE2 und insbesondere bei mechanischem Antrieb der Streuscheiben 1, 2 auch eine stufenweise Anpassung ihrer Drehzahlen DZ1, DZ2 in einander entsprechenden Drehzahlstufen DZS (siehe Fig. 2). Bei mechanischem Antrieb der Streuscheiben 1, 2 werden die Drehzahlstufen DZS beispielsweise im Bereich eines Schleppers 200 ausgewählt.

Schematisch dargestellt ist ferner eine optionale Neigungsmesseinrichtung 4 zum Messen einer ersten Hangneigung NP in Fahrtrichtung FR und einer zweiten Hangneigung NR orthogonal zur Fahrtrichtung FR.

Die Steuereinheit 3 bildet mit einer Bedienstation 5, die lediglich beispielhaft im Bereich eines mit dem Schleuderstreuer 100 verbundenen Schleppers 200 dargestellt ist, ein Steuerungssystem für den Schleuderstreuer 100. Die Bedienstation 5 kann auch am Schleuderstreuer 100 angeordnet sein. Die Bedienstation 5 dient zur Anzeige von Maschinenparametern des Schleuderstreuers 100 und zur Eingabe wenigstens einer verwendeten Düngersorte DS, einer vorzugebenden Arbeitsbreite AB für den Düngeraustrag sowie zur Auswahl einer Drehzahlstufe DZS für die Drehzahlen DZ1, DZ2.

Im nutzbaren Abwurfwinkelbereich der ersten Streuscheibe 1 ist eine Überwachungseinrichtung 6 zum Messen einer Abwurfwinkelverteilung im Wesentlichen quer zur Fahrtrichtung FR ausgebildet. Die Überwachungseinrichtung 6 umfasst mehrere ringförmig um die Streuscheibe 1 angeordnete Radarsensoren 6a. Diese senden beispielsweise Radarkeulen aus und detektieren die von den Düngerteilchen reflektierten Radarwellen auf bekannte Weise, um daraus einen Istwert des Abwurfwinkels AWW1 zu berechnen. Es wären hierzu prinzipiell auch andere Verfahren denkbar, die die weggeschleuderten Düngerteilchen beispielsweise optisch oder elektromechanisch überwachen.

Zusätzlich ist im Bereich der ersten Streuscheibe 1 eine Überwachungseinrichtung 7 zum Messen einer Wurfweiteverteilung des Düngeraustrags schematisch angedeutet. Auch die Überwachungseinrichtung 7 sendet wenigstens eine Radarkeule aus und detektiert die von den Düngerteilchen reflektierten Radarwellen auf bekannte Weise, um daraus einen Istwert der Wurfweite WW1 zu berechnen. Auch an dieser Stelle wären andere Verfahren denkbar, die die weggeschleuderten Düngerteilchen beispielsweise optisch oder elektromechanisch überwachen.

Die Streuscheiben 1, 2 werden vom Schlepper 200 mittels einer Antriebskopplung 8 gegenläufig mit vorzugsweise identischen Drehzahlen DZ1, DZ2 gedreht. Die Antriebskopplung 8 ist mechanisch mittels angedeuteter Zapfwelle, kann aber auch hydraulisch sein oder dergleichen.

Die Streuscheiben 1, 2 sind bezüglich der Fahrtrichtung FR achsensymmetrisch angeordnet und erzeugen auf einer horizontalen Referenzebene vorzugsweise entsprechend symmetrische Streubilder SB1, SB2. Dies ist in der Fig. 1 lediglich zur Verdeutlichung der charakteristischen Parameter schematisch angedeutet. Jedoch können die Streubilder SB1, SB2 je nach Vorgabe und/oder vorgefundener Topographie auch asymmetrisch ausgebildet sein. Für entsprechende Anpassungen der Istwerte der Abwurfwinkel AWW1, AWW2 an ihre Sollwerte sind die Einleitsysteme 1a, 2a daher unabhängig voneinander einstellbar.

Die Fig. 2 verdeutlicht anhand eines Drehzahl-Zeit-Diagramms, dass sich die Drehzahlen DZ1, DZ2 im Arbeitsbetrieb jeweils nur auf eine von mehreren auswählbaren Drehzahlstufen DZS einstellen lassen. Demnach ist der Bereich möglicher Drehzahlen DZ1, DZ2 bis zur maximalen Drehzahl DZMAX der Streuscheiben 2 in die Drehzahlstufen DZS unterteilt, deren Abstand voneinander auf geeignete Weise vorgegeben ist, und von denen jeweils eine zum Antrieb der Streuscheiben 1, 2 ausgewählt wird.

Die Fig. 2 zeigt beispielhaft einen Wechsel zur Zeit T1 zur nächsthöheren Drehzahlstufe DZS. Die Drehzahlstufen DZS können sich beispielsweise um wenigstens 10% der maximalen Drehzahl DZMAX voneinander unterscheiden. Denkbar wären auch absolut definierte Abstände von beispielsweise wenigstens 100 U/min oder wenigstens 200 U/min.

Die jeweils ausgewählte Drehzahlstufe DZS wird beim Austrag des Düngers möglichst unverändert beibehalten. Im Arbeitsbetrieb wird je nach Ausführungsform nur unter bestimmten Voraussetzungen auf eine benachbarte Drehzahlstufe DZS gewechselt, beispielsweise bei einer unzulässigen Abweichung der Ist-Wurfweite WW1 von der Soll-Wurfweite WWs1 oder bei Erreichen einer Verstellgrenze der Einleitsysteme 1a, 2a.

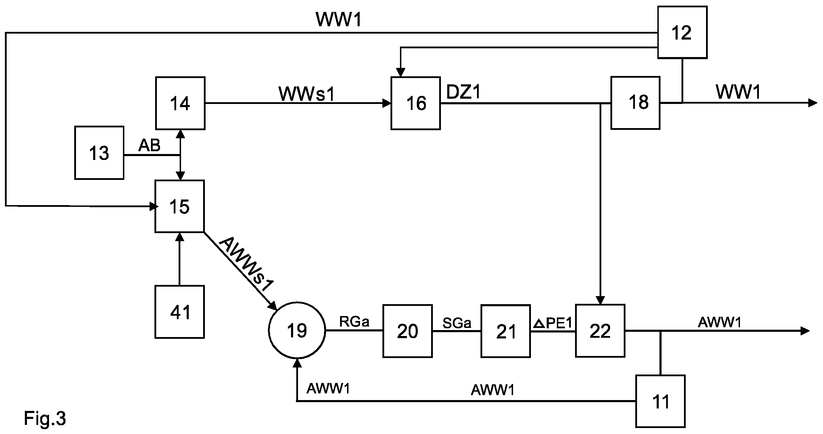

Wie die Fig. 3 hinsichtlich des Verfahrens erkennen lässt, erfolgt die Regelung des Abwurfverhaltens bei einer ersten bevorzugten Ausführungsform der Erfindung durch fortlaufende Regelung des Ist-Abwurfwinkels AWW1 und bei konstanter Drehzahl DZ1 und somit unter Beibehaltung der zugehörigen Drehzahlstufe DZS.

Nachfolgend wird stellvertretend nur die Regelung an der ersten Streuscheibe 1 beschrieben. Die zweite Streuscheibe 2 kann auf gleiche Weise auf der Grundlage der an der ersten Streuscheibe 1 gewonnen Messdaten und Berechnungsergebnisse geregelt werden oder auf entsprechende Weise mittels entsprechender Überwachungseinrichtungen an der zweiten Streuscheibe 2.

Im Einzelnen basiert die Regelung gemäß Fig. 3 auf einem Schritt 11 zur fortlaufenden Messung des Ist-Abwurfwinkels AWW1 des Düngeraustrags mit der Überwachungseinrichtung 6, auf einem Schritt 12 zur fortlaufenden Messung der Ist-Wurfweite WW1 des Düngeraustrags mit der Überwachungseinrichtung 7, und auf einem Schritt 13 zur bedienerseitigen Vorgabe eines Sollwerts für die Arbeitsbreite AB.

In einem Schritt 14 wird aus der Soll-Arbeitsbreite AB eine Soll-Wurfweite WWs1 berechnet. Hierzu eignet sich beispielsweise ein empirisch ermittelter Umrechnungsfaktor von 0,60 bis 0,65. Die Soll-Wurfweite WWs1 ergibt sich beispielsweise aus: WWs1 = 0,62 * AB.

In einem Schritt 15 wird aus der im Schritt 13 vorgegebenen Soll-Arbeitsbreite AB und passend zu der im Schritt 12 ermittelten Ist-Wurfweite WW1 ein angepasster Soll-Abwurfwinkel AWWs1 für die Abwurfwinkelregelung in Schritt 19 berechnet und vorzugsweise laufend aktualisiert. Diese Werte können je nach gewünschtem Streuprofil anhand von empirisch gewonnenen Daten und/oder aufgrund theoretischer Überlegungen aufeinander abgestimmt werden.

In einem Schritt 16 wird eine zu der im Schritt 14 berechneten Soll-Wurfweite WWs1 möglichst gut passende Drehzahl DZ1 eingestellt. Die Einstellung dieser Drehzahl erfolgt durch Vorgabe einer Soll-Wurfweite WWs1 im Schritt 14 und Berücksichtigung der im Schritt 12 gemessenen und vom jeweilis verwendeten Dünger abhängigen Ist-Wurfweite innerhalb eines Regelkreises. Die Drehzahl kann hierbei nur in diskreten Stufen eingestellt werden und es wird im Schritt 16 die Drehzahl derart angepasst, dass eine Drehzahlstufe DZ1 eingestellt wird, die zu einer Ist-Wurfweite WW1 führt, die der gewünschten Soll-Wurfweite WWs1 möglichst nahe kommt bzw. möglichst knapp darunter liegt. Denkbar ist zudem, dass zum erstmaligen Einstellen des Streuers beim Beginn der Arbeit oder bei einer Änderung der Sollwertvorgabe für die Wurfweite zunächst eine empirisch ermittelte und gespeicherte Drehzahlstuf eingestellt wird, um der gewünschten Soll-Wurfweite in einem ersten Schritt möglichst nahe zu kommen. Die Drehzahlstufe DZS mit einer möglichst nah unterhalb der SollWurfweite WWs1 liegenden Ist-Wurfweite WW1 eignet sich besonders für eine kompensatorische Vergrößerung des Soll-Abwurfwinkels AWWs1 ausgehend von dreieckförmigen Streuprofilen, siehe unten.

In einem Schritt 19 wird aus dem Soll-Abwurfwinkel AAWsO und dem gemessenen Ist-Abwurfwinkel AWW1 eine Regelgröße RGa für die Abwurfwinkelregelung berechnet, beispielsweise durch Differenzbildung.

In einem Schritt 20 ermittelt ein Regler unter Berücksichtigung eines bekannten Regelstreckenverhaltens 21 des Einleitsystems 1a eine Stellgröße SGa der Abwurfwinkelregelung für das Einleitsystem 1a der ersten Streuscheibe 1, beispielsweise in Form einer Änderung ΔPE1 für die Stellung PE1.

In einem Schritt 22 wird die Stellung PE1 unter Berücksichtigung der Drehzahl DZ1 entsprechend geändert, wodurch der Ist-Abwurfwinkel AWW1 nachgeregelt wird.

Durch erneute Ausführung des Schritts 11, also eine Messung des nachgeregelten Ist-Abwurfwinkels AWW1, wird die Regelschleife der Abwurfwinkelregelung geschlossen und kann für die fortlaufende Überwachung des Streubilds SB1 erneut durchlaufen werden.

In einem Schritt 18 bewirkt die Drehzahl DZ1 eine Ist-Wurfweite WW1, die im Schritt 12 fortlaufend gemessen wird.

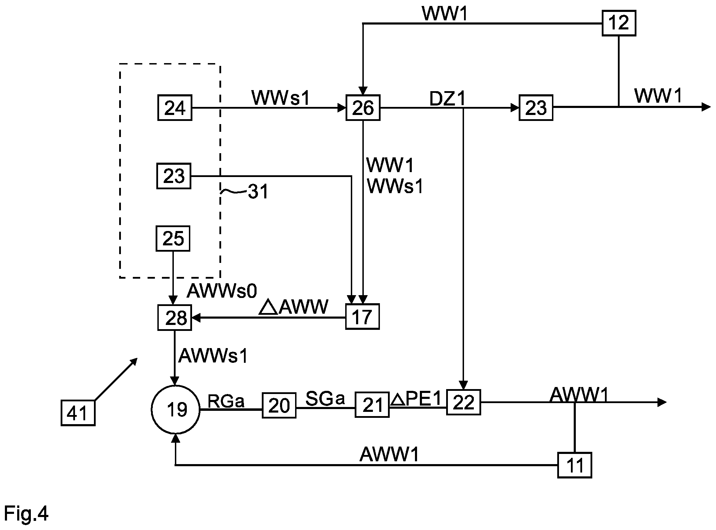

Wie die Fig. 4 hinsichtlich des Verfahrens zudem erkennen lässt, unterscheidet sich die Regelung des Abwurfverhaltens bei einer zweiten bevorzugten Ausführungsform von der Regelung gemäß Fig. 3 durch die nachfolgend beschrieben Schritte.

Demnach werden die Soll-Arbeitsbreite AB, die Soll-Wurfweite WWs1 und der vorgegebene Soll-Abwurfwinkel AWWsO in Schritten 23, 24, 25 auf der Grundlage von Messdaten aus standardisierten Streuversuchen 31 bedienerseitig festgelegt. Hierbei ist es vorteilhaft, den vorgegebenen Soll-Abwurfwinkel AWWsO zugunsten eines möglichst dreieckförmigen Streuprofils für das Anschlussfahren zuerst zu optimieren, beispielsweise auf Werte von 18 bis 20°, und die Soll-Wurfweite WWs1 für die gewünschte Arbeitsbreite AB daran anzupassen.

Die Streuversuche 31 werden mit unterschiedlichen Drehzahlen DZ1 bei einer Drehzahlabstufung durchgeführt, die feiner ist als die Abstufung der wählbaren Drehzahlstufen DZS. Durch Interpolation der im Streuversuch 31 derart gemessenen Wurfweiten kann man den einzelnen Drehzahlstufen DZS dann jeweils eine Wurfweite auf einfache und präzise Weise zu zuordnen, um beispielsweise eine Voreinstellung einer passenden DZS beim Beginn der Arbeit druchzuführen. Die eigentliche Einstellung der DZS während der Arbeit erfolgt dann geregelt mittels der Bestimmung der Wurfweite WW1 im Schritt 12.

Der Schritt 26 entspricht im Wesentlichen dem Schritt 16. Auch hier ist vorgesehen, einen Wechsel der Drehzahlstufe DZS und somit der Drehzahl DZ1 während des Düngeraustrags zu erlauben, falls ein dafür vorgegebenes Kriterium erfüllt ist. Dies kann beispielsweise eine über ein bestimmtes Maß hinausgehende Abweichung der gemessen Ist-Wurfweite WW1 von der Soll-Wurfweite WWs1 sein. Ebenso wäre dies am Ende eines sinnvollen Verstellbereichs des Einleitsystems 1a denkbar.

Mit einem Wechsel der Drehzahlstufe DZS lässt sich verhindern, dass ein in Schritt 17 zu berechnender kompensatorischer Winkelversatz ΔAWW einen praktikablen und/oder vorteilhaften Arbeitsbereich verlässt. Dies wäre beispielsweise der Fall, wenn das Streuprofil ohne Wechsel der Drehzahlstufe DZS eine unerwünschte Trapezform annehmen würde.

Ein Wechsel der Drehzahlstufe DZS ist jedoch nachrangig und/oder wird nicht fortlaufend ausgeführt, im Gegensatz zur fortlaufenden Nachregelung des Ist-Abwurfwinkels AWW1.

Auf einen nötigen Wechsel der Drehzahlstufe DZS kann insbesondere bei mechanischem Antrieb der Streuscheiben 2 durch einen Alarm aufmerksam gemacht werden. Der Wechsel der Drehzahl DZ1 kann dann bedienerseitig durch Aktivierung einer benachbarten Drehzahlstufe DZS eingeleitet werden. Im Schritt 17 wird zu der jeweils ermittelten Ist-Wurfweite WW1 und der gewünschten Soll-Wurfweite WWs1 ein kompensatorischer Winkelversatz ΔAWW ermittelt. Hierzu kann zusätzlich zur Soll-Wurfweite oder alternativ dazu ein mittels Streuversuchen ermittelter Sollwert AB für die Arbeitsbreite aus Schritt 23 herangezogen werden.

Der Schritt 28 gibt, korrespondierend zu Schritt 15, einen Soll-Abwurfwinkel AWWs1 aus, wobei hier ggf. ein kompensatorischer Winkelversatz ΔAWW statt der Ist-Wurfweite WW1 berücksichtigt wird. Mit anderen Worten wird also im Ausführungsbeispiel gemäß Fig. 4 ein mittels Streuversuchen ermittelter Soll-Abwurfwinkel AWWsO vorgegeben und dieser ggf. durch einen im Schritt 17 vorgegebenen kompensatorischen Winkelversatz ΔAWW an die aktuelle Ist-Wurfweite WW1 angepasst. Zusätzlich ist in den Fig.en 3 und 4 ein Schritt 41 angedeutet zum Ausführen einer anfänglichen Kalibrierungsfahrt, die beispielsweise 15 Sekunden lang ist und zur Initialisierung der Regelung mit dem verwendeten Streuscheiben 2 und der verwendeten Düngersorte DS dient. Anschließend kann der reguläre Arbeitsbetrieb aufgenommen werden. Dadurch lässt sich ein korrektes und von Anfang an stabiles Regelverhalten erzielen.

Die Drehzahl DZ1 wird bei mechanischem Antrieb der Streuscheiben 2 dadurch eingestellt, dass dem Bediener geeignete Drehzahlstufen DZS angezeigt werden und insbesondere die jeweils am besten geeignete Drehzahlstufe DZS vorgeschlagen wird. Dieses Vorgehen ist prinzipiell auch bei anderen Antriebssystemen für die Streuscheiben 2 denkbar.

Das Regelstreckenverhalten zur Änderung der Ist-Wurfweite WW1 in Abhängigkeit von der Drehzahl DZ1 und des Ist-Abwurfwinkels AWW1 in Abhängigkeit von der Stellung PE1 des Einleitsystems 1a ist jeweils prinzipiell bekannt und daher in diesem Zusammenhang nicht näher erläutert.

Die Schritte 13 bis 15 und 23 bis 25, die Schritte 16 und 26 sowie die Schritte 15 und 28 lassen sich prinzipiell unabhängig von den beispielhaft bezüglich der Fig.en 3 und 4 beschriebenen Ausführungsformen miteinander kombinieren.

Das beschriebene Verfahren lässt sich beispielsweise mit der Steuereinheit 3 und der Bedienstation 5 durchführen.

## Patentansprüche

1. Verfahren zur Regelung des Abwurfverhaltens eines Schleuderstreuers (100) für Dünger, wobei eine Soll-Wurfweite (WWs1) für eine Soll-Arbeitsbreite (AB) ermittelt wird, wobei für wenigstens eine Streuscheibe (1, 2) eine von mehreren Drehzahlstufen (DZS) eingestellt wird, um die Ist-Wurfweite (WW1) an die Soll-Wurfweite (WWs1) anzunähern, **dadurch gekennzeichnet, dass** ein angepasster Soll-Abwurfwinkel (AWWs1) zur Regelung eines Ist-Abwurfwinkels (AWW1) aus der Ist-Wurfweite(WW1) ermittelt wird, der einer vom Unterschied zwischen Ist-Wurfweite (WW1) und Soll-Wurfweite (WWs1) verursachten Abweichung von der Soll-Arbeitsbreite (AB) kompensatorisch entgegenwirkt.

2. Verfahren nach Anspruch 1, wobei zur Ermittlung des angepassten Soll-Abwurfwinkels (AWWs1) ein vorgegebener Soll-Abwurfwinkel (AWWs0) um einen Winkelversatz (ΔAWW) angepasst wird.

3. Verfahren nach Anspruch 1 oder 2, wobei sich benachbarte Drehzahlstufen (DZS) um wenigstens 10% der maximalen Drehzahl (DZMAX) der Schleuderscheibe (1, 2) voneinander unterscheiden.

4. Verfahren nach einem der vorigen Ansprüche, wobei die Ist-Wurfweite (WW1) beim Austrag des Düngers fortlaufend gemessen wird, insbesondere mittels Radarstrahlung, und mit der Soll-Wurfweite (WWs1) verglichen wird.

5. Verfahren nach einem der vorigen Ansprüche, wobei der Ist-Abwurfwinkel (AWW1) beim Austrag des Düngers fortlaufend gemessen wird, insbesondere mittels Radarstrahlung, und mit dem angepassten Soll-Abwurfwinkel (AWWs1) verglichen wird.

6. Verfahren nach einem der vorigen Ansprüche, wobei die Regelung den Ist-Abwurfwinkel (AWW1) beim Austrag des Düngers in Zeitintervallen von mindestens 5 s Dauer nachregelt.

7. Verfahren nach einem der vorigen Ansprüche, wobei der Ist-Abwurfwinkel (AWW1) fortlaufend auf der Grundlage des angepassten Soll-Abwurfwinkels (AWWs1) nachgeregelt und die Drehzahlstufe (DZS) währenddessen nicht oder nur gewechselt wird, falls ein vorgegebenes Schwellenkriterium erfüllt ist.

8. Verfahren nach Anspruch 6, wobei das Schwellenkriterium erfüllt ist, falls eine einer benachbarten Drehzahlstufe (DZS) zugeordnete Wurfweite näher an der Soll-Wurfweite (WWs1) liegt als die gemessene Ist-Wurfweite (WW1), und/oder falls der Ist-Abwurfwinkel (AWW1) einen zulässigen Winkelbereich verlässt, insbesondere einen Bereich von 18° bis 25°.

9. Verfahren nach einem der vorigen Ansprüche, wobei die Soll-Wurfweite (WW1) aus einem vorgegebenen Soll-Abwurfwinkel (AWWs0) von insbesondere 18 bis 20° und der Soll-Arbeitsbreite (AB) berechnet wird.

10. Verfahren nach einem der vorigen Ansprüche, wobei die Soll-Wurfweite (WWs1) und der vorgegebene Soll-Abwurfwinkel (AWWs0) für die Soll-Arbeitsbreite (AB) auf der Grundlage von Streuversuchen (31) mit dem Dünger festgelegt werden.

11. Verfahren nach einem der vorigen Ansprüche, wobei der Winkelversatz (ΔAWW) auf der Grundlage einer in Streuversuchen (31) für unterschiedliche Soll-Abwurfwinkel (AWWs0) des Düngers ermittelten Abhängigkeit der Ist-Wurfweite (WW1) von der Drehzahl (DZ1, DZ2) der Schleuderscheibe (1, 2) eingestellt wird.

12. Verfahren nach einem der vorigen Ansprüche, wobei vor dem Austrag des Düngers eine Kalibrierungsfahrt (41) von 10 bis 20 s Dauer unter Vorgabe der Soll-Arbeitsbreite (AB) und unter Verwendung der Streuscheibe (1) zur Aktualisierung der Regelung durchgeführt wird.

13. Verfahren nach Anspruch 12, wobei die Kalibrierungsfahrt (41) nur durchgeführt wird, falls für die Drehzahl (DZ1, DZ2) der Streuscheibe (1, 2) nach einer vorangegangenen Kalibrierungsfahrt (41) wenigstens einmal der Wert 0 registriert wurde, und falls wenigstens eine Streuscheibe (1, 2) im Streumodus für normales Anschlussfahren ist.

14. Schleuderstreuer für Dünger, mit zwei Streuscheiben (1, 2) zum Austrag des Düngers über die vorgegebene Arbeitsbreite (AB) und mit einer Regelungseinheit (3) zum Ausführen des Verfahrens nach wenigstens einem der vorigen Ansprüche.

15. Schleuderstreuer nach Anspruch 14, ferner mit einem mechanischen Antrieb für die Streuscheiben und mit einer Bedieneinheit (5) zum Einstellen der Drehzahlstufe (DZS) durch Auswahl aus mehreren vorgegebenen Drehzahlstufen (DZS).

## Claims

1. Method for regulating the throwing behaviour of a centrifugal spreader (100) for fertilizer, wherein a setpoint throwing distance (WWs1) is determined for a setpoint working width (AB), wherein one of a plurality of rotational speed stages (DZS) is set for at least one spreader disc (1, 2), in order to approximate the actual throwing distance (WW1) to the setpoint throwing distance (WWs1), **characterized in that**
an adapted setpoint throwing angle (AWWs1) for regulating an actual throwing angle (AWW1) is determined from the actual throwing distance (WW1), which setpoint throwing angle (AWWs1) counteracts in a compensatory fashion a deviation from the setpoint working width (AB), which is caused by the difference between the actual throwing distance (WW1) and the setpoint throwing distance (WWs1).

2. Method according to Claim 1, wherein, in order to determine the adapted setpoint throwing angle (AWWs1), a predefined setpoint throwing angle (AWWs0) is adapted by an angular offset (ΔAWW).

3. Method according to Claim 1 or 2, wherein adjacent rotational speed stages (DZS) differ from one another by at least 10% of the maximum rotational speed (DZMAX) of the spreader disc (1, 2).

4. Method according to one of the preceding claims, wherein during the discharging of the fertilizer the actual throwing distance (WW1) is measured continuously, in particular by means of radar radiation, and is compared with the setpoint throwing distance (WWs1).

5. Method according to one of the preceding claims, wherein during the discharging of the fertilizer the actual throwing angle (AWW1) is measured continuously, in particular by means of radar radiation, and is compared with the adapted setpoint throwing angle (AWWs1).

6. Method according to one of the preceding claims, wherein the regulating process adjusts the actual throwing angle (AWW1) in time intervals of at least 5 s duration during the discharging of the fertilizer.

7. Method according to one of the preceding claims, wherein the actual throwing angle (AWW1) is continuously adjusted on the basis of the adapted setpoint throwing angle (AWWs1), and the rotational speed stage (DZS) is not changed during this time, or is changed only if a predefined threshold criterion is satisfied.

8. Method according to Claim 6, wherein the threshold criterion is satisfied if a throwing distance which is assigned to an adjacent rotational speed stage (DZS) is closer to the setpoint throwing distance (WWs1) than the measured actual throwing distance (WW1), and/or if the actual throwing angle (AWW1) leaves a permissible angle range, in particular a range from 18° to 25°.

9. Method according to one of the preceding claims, wherein the setpoint throwing distance (WW1) is calculated from a predefined throwing angle (AWWs0) of, in particular, 18 to 20° and the setpoint working width (AB).

10. Method according to one of the preceding claims, wherein the setpoint throwing distance (WWs1) and the predefined setpoint throwing angle (AWWs0) for the setpoint working width (AB) are defined on the basis of spreading attempts (31) with the fertilizer.

11. Method according to one of the preceding claims, wherein the angular offset (ΔAWW) is set on the basis of a dependence of the actual throwing distance (WW1) on the rotational speed (DZ1, DZ2) of the spreader disc (1, 2), which dependence is determined in spreading attempts (31) for different setpoint throwing angles (AWWs0).

12. Method according to one of the preceding claims, wherein before the discharging of the fertilizer a calibration run (41) of 10 to 20 s duration is carried out while predefining the setpoint working width (AB) and using the spreader disc (1) to update the regulating process.

13. Method according to Claim 12, wherein the calibration run (41) is carried out only if the value 0 has been registered at least once for the rotational speed (DZ1, DZ2) of the spreader disc (1, 2) after a preceding calibration run (41), and if at least one spreader disc (1, 2) is in the spreading mode for normal subsequent travel.

14. Centrifugal spreader for fertilizer, having two spreader discs (1, 2) for discharging the fertilizer over the predefined working width (AB) and having a regulating unit (3) for carrying out the method according to at least one of the preceding claims.

15. Centrifugal spreader according to Claim 14, also having a mechanical drive for the spreader discs and having an operator control unit (5) for setting the rotational speed stage (DZS) by selection from a plurality of predefined rotational speed stages (DZS).

## Revendications

1. Procédé de réglage du comportement d'évacuation d'un épandeur centrifuge (100) destiné à des engrais, une portée de projection cible (WWs1) étant déterminée pour une largeur de travail cible (AB), l'un parmi plusieurs niveaux de vitesse de rotation (DZS) étant réglé pour au moins un disque d'épandage (1, 2) afin de rapprocher la portée de projection réelle (WW1) de la portée de projection cible (WWs1), **caractérisé en ce que**
pour régler un angle de projection réel (AWW1), un angle de projection cible adapté (AWWs1) étant déterminé à partir de la portée de projection réelle (WW1) qui contrebalance de manière compensatoire l'écart, par rapport à la largeur de travail (AB), qui est causée par la différence entre la portée de projection réelle (WW1) et la portée de projection cible (WWs1).

2. Procédé selon la revendication 1, un angle de projection cible spécifié (AWWs0) étant adapté d'un décalage angulaire (ΔAWW) pour déterminer l'angle de projection cible adapté (AWWs1).

3. Procédé selon la revendication 1 ou 2, les niveaux de vitesse de rotation adjacents (DZS) différant les uns des autres d'au moins 10 % de la vitesse de rotation maximale (DZMAX) du disque centrifuge (1, 2).

4. Procédé selon l'une des revendications précédentes, la portée de projection réelle (WW1) étant mesurée en continu lors de l'éjection de l'engrais, notamment au moyen d'un rayonnement radar, et étant comparée à la portée de projection cible (WWs1).

5. Procédé selon l'une des revendications précédentes, l'angle de projection réel (AWW1) étant mesuré en continu lors de l'éjection de l'engrais, en particulier au moyen d'un rayonnement radar, et étant comparé à l'angle de projection cible adapté (AWWs1).

6. Procédé selon l'une des revendications précédentes, le réglage réajustant l'angle de projection réel (AWW1) lors de l'éjection de l'engrais à des intervalles de temps d'au moins 5 secondes.

7. Procédé selon l'une des revendications précédentes, l'angle de projection réel (AWW1) étant réajusté en continu sur la base de l'angle de projection cible adapté (AWWs1) et le niveau de vitesse de rotation (DZS) n'étant pas modifié ou ne l'étant que si un critère de seuil spécifié est satisfait.

8. Procédé selon la revendication 6, le critère de seuil étant satisfait si une portée de projection associée à un niveau de vitesse de rotation adjacent (DZS) est plus proche de la portée de projection cible (WWs1) que la portée de projection réelle mesurée (WW1), et/ou si l'angle de projection réel (AWW1) sort d'une plage angulaire admissible, en particulier d'une plage de 18° à 25°.

9. Procédé selon l'une des revendications précédentes, la portée de projection cible (WW1) étant calculée à partir d'un angle de projection cible spécifié (AWWs0) notamment de 18 à 20° et de la largeur de travail cible (AB).

10. Procédé selon l'une des revendications précédentes, la portée de projection cible (WWs1) et l'angle de projection cible spécifié (AWWs0) pour la largeur de travail cible (AB) étant déterminés sur la base d'essais d'épandage (31) avec l'engrais.

11. Procédé selon l'une des revendications précédentes, le décalage angulaire (ΔAWW) étant réglé sur la base d'une dépendance de la portée de projection réelle (WW1) vis-à-vis de la vitesse de rotation (DZ1, DZ2) du disque centrifuge (1, 2), laquelle dépendance est déterminée dans des essais d'épandage (31) pour différents angles de projection cible (AWWs0) de l'engrais.

12. Procédé selon l'une des revendications précédentes, une opération d'étalonnage (41) d'une durée de 10 à 20 s étant effectuée avant l'éjection de l'engrais, par spécification de la largeur de travail cible (AB) et à l'aide du disque d'épandage (1) pour actualiser le réglage.

13. Procédé selon la revendication 12, l'opération d'étalonnage (41) n'étant effectuée que si la valeur 0 a été enregistrée au moins une fois pour la vitesse de rotation (DZ1, DZ2) du disque d'épandage (1, 2) après une opération d'étalonnage précédente (41), et si au moins un disque d'épandage (1, 2) est en mode d'épandage pour un raccordement normal.

14. Épandeur centrifuge d'engrais, comprenant deux disques d'épandage (1, 2) destiné à éjecter l'engrais sur la largeur de travail spécifiée (AB) et une unité de réglage (3) destinée à mettre en œuvre le procédé selon l'une au moins des revendications précédentes.

15. Épandeur centrifuge selon la revendication 14, comprenant en outre un entraînement mécanique des disques d'épandage et une unité de réglage (5) destinée à régler le niveau de vitesse de rotation (DZS) par sélection parmi plusieurs niveaux de vitesse de rotation spécifiés (DZS).
